# DEMANDE DE BREVET EUROPEEN

(11) **EP 1 234 632 A1**
(43) Date de publication de la demande: **28.08.2002**
(21) Numéro de dépôt: 01810193.1
(22) Date de dépôt: 23.02.2001
(51) Int. Cl.: B23Q 1/54, B23Q 1/48, B25J 17/02, B25J 9/10

(54) **Dispositif cinématique du support et de déplacement programmable d'un élément terminal dans une machine ou un instrument**

(71) Demandeur: Willemin Machines S.A., 2854 Bassecourt (CH)
(72) Inventeur: Thurneysen, Markus, 1008 Jouxtens-Mézery (CH); Clavel, Reymond, 1041 Oulens/Echallens (CH)
(74) Mandataire: Ganguillet, Cyril

(57) **Abrégé**

La nacelle 11 porte l'élément terminal 21. Elle est reliée par les quatre rotules 9 et 10 à deux jambes formées chacune de deux barres de support 7 ou 8 formant des parallélogrammes déformables montés chacun sur un des coulisseaux 3 ou 4 mobiles dans la direction x. La plaque de pivotement 29 articulée sur la nacelle 11 autour de l'axe 30 est soumise aux barres de contrôle 27, de commande de pivotement 14 et de déplacement latéral 18 reliées respectivement par les rotules 26, 13 et 17 aux coulisseaux 3, 12 et 23. Il s'agit d'une cinématique parallèle à quatre degré de liberté, à savoir trois translations et une rotation dont l'angle peut être supérieur à 120°.

## Description

La présente invention appartient au domaine technique des dispositifs cinématiques de support et de déplacement qui permettent de commander de manière programmable et avec une précision élevée des déplacements en translation et/ou en rotation d'un élément terminal dans un champ de travail prédéterminé.

L'élément terminal peut être un outil d'usinage (broche, laser, jet d'eau, électroérosion, etc.) ou un porteur de pièces dans le cas où le dispositif est incorporé à un centre d'usinage, par exemple, ou un instrument de préhension, un outil de montage, un capteur de mesure, un interface utilisateur pour joystick à retour de forces, une antenne, un porte-caméra, etc., dans le cas de machines de transfert, de robots de montage, de machines d'emballage, d'instruments de mesure, d'instruments médicaux, etc., soit tout dispositif où un positionnement ou déplacement de haute précision et/ou une dynamique élevée est nécessaire.

Dans ce domaine, il existe de nombreuses applications nécessitant un préhenseur dont l'orientation soit contrôlable autour d'un axe parallèle à la base. C'est le cas, par exemple, pour la production par usinage de pièces complexes ou pour le polissage de pièces de haute qualité esthétique.

En particulier, pour la production à haute cadence de petites pièces complexes, il est nécessaire de disposer de machines qui non seulement sont capables de hautes vitesses d'usinage, mais également de changements d'outils très rapides de façon à minimiser le temps copeaux à copeaux.

Par leur dynamique élevée (faible masse mobile et raideur élevée), les machines-outils à cinématique parallèle peuvent répondre favorablement à ces deux contraintes.

Cependant, les principaux défauts des robots et machines-outils parallèles existant sur le marché résident dans leur volume de travail relativement faible et une mobilité angulaire très limitée.

Une structure très performante, qui s'applique plus spécifiquement à la commande du déplacement d'un élément terminal, comme par exemple un organe de préhension, est décrite dans les brevets européen EP 0250470 et américain US 4,976,582. Dans cette structure, la commande des trois degrés de liberté de base s'effectue en parallèle à partir d'actionneurs disposés sur un support fixe, en conservant le parallélisme de l'élément mobile par rapport au support fixe. Compte tenu de sa dynamique élevée et sa mobilité de trois translations dans l'espace, une telle structure est particulièrement bien adaptée pour le transfert de pièces légères à des cadences très élevées (plus de trois transferts par seconde). L'originalité de cette structure réside dans le blocage de tous les mouvements d'orientations du préhenseur par la disposition cinématique. En revanche, un tel dispositif ne permet pas de répondre tel quel aux applications pour lesquelles une ou plusieurs rotations sont requises.

On connaît d'autre part les publications de demandes internationales WO 98/51443 et WO 99/32256 qui concernent la commande à cinématique parallèle d'outils tels que des fraises dans des machines-outils destinées à la fabrication de pièces délicates, notamment des aubes de turbines. Toutefois, les dispositifs décrits dans ces documents ne permettent d'effectuer que des mouvements angulaires peu importants de l'outil (d'environ ± 30°) si l'on veut conserver une bonne rigidité de la structure.

Le but de la présente invention est de proposer un dispositif à cinématique parallèle qui réponde mieux et de façon plus globale aux besoins indiqués ci-dessus que les dispositifs connus et qui offre en particulier une rapidité et une précision de travail aussi grandes que possible tout en permettant de programmer des déplacements de l'élément terminal dans un champ de travail ayant un volume aussi grand que possible et assurant un comportement homogène dans ce volume de travail.

Pour cela le dispositif selon la présente invention présente les caractéristiques définies selon les revendications annexées, dont le contenu doit être considéré comme faisant partie intégrante de la présente description.

On va décrire ci-après à titre d'exemples diverses formes d'exécution du dispositif selon l'invention en se référant au dessin schématique annexé dans lequel :
La figure 1 est une vue d'ensemble, en perspective, d'une première forme d'exécution du dispositif,
La figure 2 est une vue d'ensemble, en perspective, d'une première variante de la première forme d'exécution,
La figure 3 est une vue d'ensemble, en perspective, d'une deuxième forme d'exécution,
La figure 4 est une vue en élévation d'une variante de la deuxième forme d'exécution,
La figure 5 est une vue d'ensemble, en perspective, d'une troisième forme d'exécution,
La figure 6 est une vue en élévation d'une variante de la troisième forme d'exécution,
La figure 7 est une vue d'ensemble, en perspective, d'une quatrième forme d'exécution,
La figure 8 est une vue d'ensemble, en perspective, d'une variante de la quatrième forme d'exécution,
La figure 9 est une vue en perspective d'une application à une machine-outil d'une variante de la deuxième forme d'exécution, et
La figure 10 est une vue d'ensemble, en perspective, d'une seconde variante de la première forme d'exécution du dispositif.

Dans le cadre de la présente description, on entend par "articulation utile" une articulation nécessaire pour le fonctionnement du dispositif auquel elle est rattachée, par opposition à des articulations qui autorisent des mobilités internes, comme par exemple dans le cas d'une barre munie de deux rotules à ses extrémités et qui a la possibilité de tourner sur elle-même, ce qui n'apporte aucune fonctionnalité.

Les figures représentent des dispositifs de support et de déplacement schématisés et susceptibles d'être appliqués soit à une machine-outil, un instrument ou un robot, soit à un autre type de machine de travail, comme par exemple une machine de montage. Dans le cas d'une machine de transfert de pièces, l'élément terminal peut être une pince, ou une ventouse, ou tout autre type d'organe de préhension. Dans le cas d'une machine-outil, cet élément terminal peut être soit une broche portant une fraise, une meule de rectifiage, une mèche de perçage, un porte-pièce, etc., soit un dispositif de jet d'eau, de découpe laser, d'électroérosion, d'ébavurage, de sablage, de peinture, de polissage, etc.. La machine peut être équipée de préhenseurs et d'outils d'usinage embarqués sur l'élément terminal, par exemple montés sur une tête revolver, ou associés à un changeur d'outils actif ou passif (soit un stock d'outils et/ou de porte-pièces).

Dans les formes d'exécution décrites ci-après, pour une meilleure compréhension des figures, l'élément terminal est symbolisé par un corps de moteur qui est associé de manière rigide à une pièce rigide appelée nacelle, celle-ci faisant partie de la structure de support et de déplacement. Cependant on rencontrera des cas, comme on le verra plus loin où l'élément terminal est monté sur la nacelle par un dispositif de pivotement autour d'un axe lié à la nacelle.

Les dispositifs décrits comportent dans chaque cas une base de référence 1 qui dans la plupart des cas reste fixe. Celle-ci sera en général matérialisée par une ou plusieurs surfaces planes reliée(s) au socle de la machine, mais bien entendu cette ou ces surfaces de base pourraient aussi être incurvées. Il est essentiel cependant pour la cohérence de la description qu'elles définissent un référentiel cartésien, à partir duquel les axes x,y,z de l'espace de travail soient déterminés. Par la suite on considéra que les axes x et y de ce référentiel cartésien sont définis dans le plan de la base du dispositif, et que la direction y est parallèle à l'axe de rotation de la nacelle.

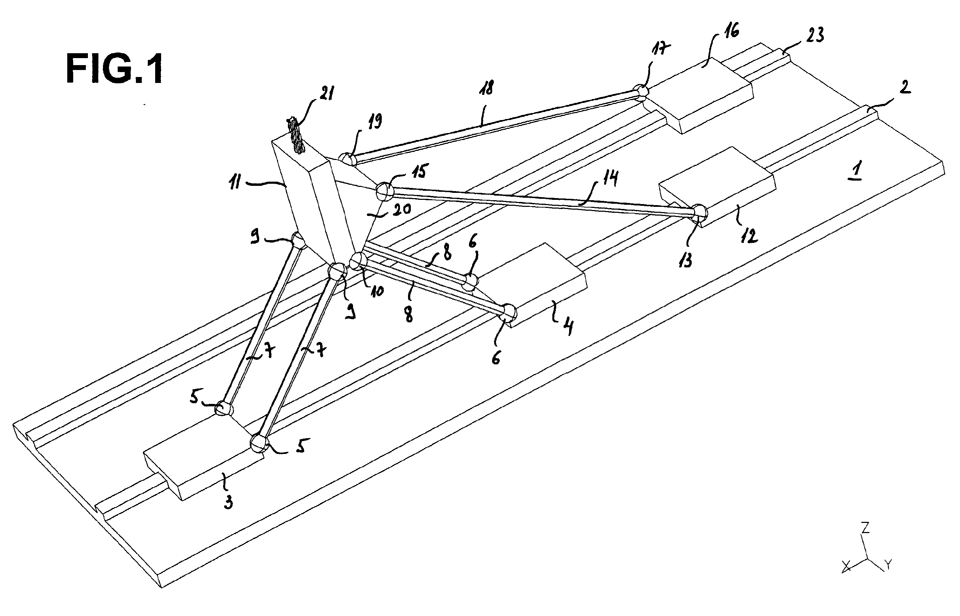

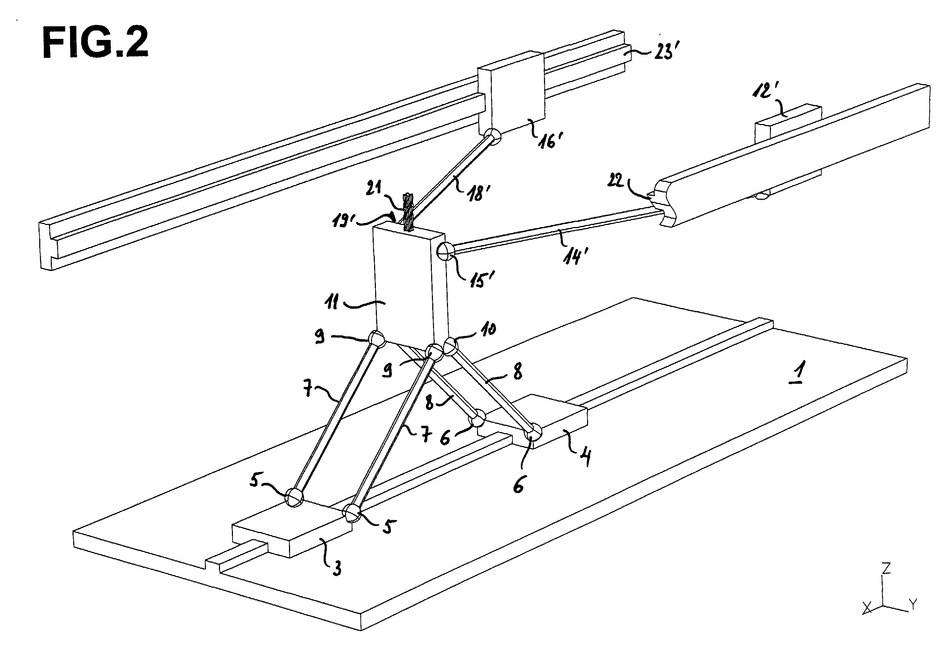

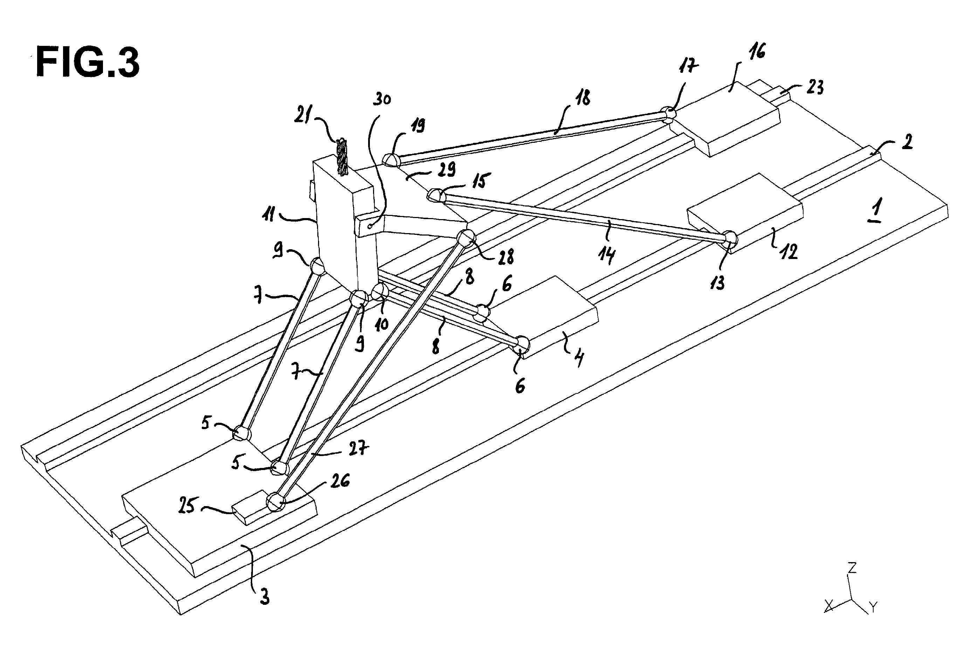

Les dispositifs représentés schématiquement aux figures 1 et 2 sont des dispositifs simplifiés, dans lesquels le nombre des éléments de structure est réduit. L'espace de travail que l'élément terminal peut parcourir n'est pas si grand, à égalité des autres dimensions que ce que permet d'atteindre le dispositif de la figure 3, par exemple, mais la réduction de poids des éléments mobiles obtenue par la simplification de la structure, leur ouvre des possibilités d'emploi spécifiques, par exemple pour des applications où la précision est primordiale.

Dans la surface de base plane 1 du dispositif représenté à la figure 1 est aménagé un guidage prismatique 2, rectiligne et à un degré de liberté en translation, définissant une direction qui, par convention, est appelée direction x. Deux coulisseaux motorisés 3 et 4 sont montés sur le guidage 2 de manière que la commande du mouvement de ces coulisseaux permette de les déplacer indépendamment l'un de l'autre dans la direction x. Chacun des coulisseaux 3 et 4 porte à ses deux extrémités, c'est-à-dire sur une ligne qui reste sensiblement perpendiculaire à x, deux rotules 5, respectivement 6, qui servent d'appui et d'articulation sur le coulisseau à des paires de barres de support rigides 7, respectivement 8, les extrémités supérieures de chacune de ces paires de barres de support portant à leur tour deux paires de rotules 9, respectivement 10, articulant une nacelle 11 sur les deux jambes formées par les paires de barres 7 et 8. Les deux barres de chaque paires 7 ou 8 sont de préférence parallèles. La nacelle 11 est ici figurée par un bloc en forme de parallélépipède rectangle dont la surface inférieure rectangulaire porte à chacun de ses quatre angles une des rotules 9 ou 10. Les rotules 9 ou 10 peuvent également se trouver à n'importe quel endroit dans le volume parallélépipédique de la nacelle 11, à la condition toutefois que les deux rotules 9, respectivement 10, d'une paire soient placées sur une droite parallèle à l'axe de rotation de la nacelle 11. Sur la nacelle 11 est rigidement fixé le corps d'un élément terminal (organe actif ou passif) 21, par exemple une broche portant une fraise ou autre outil rotatif, dont l'axe de rotation peut être orienté arbitrairement par rapport à la nacelle.

Le dispositif comporte en outre une structure auxiliaire qui contrôle les deux degrés de liberté résiduels de la nacelle et donc de l'élément terminal 21. Cette structure comprend d'une part une barre de pivotement 14, destinée à la commande du pivotement de la nacelle, et d'autre part une barre latérale 18, destinée au contrôle du degré de liberté de la nacelle dans le sens y.

La barre de pivotement 14 est articulée, à l'une de ses extrémités, par l'intermédiaire d'une rotule 13, sur un coulisseau motorisé 12, agencé pour se déplacer sur le guidage prismatique 2, en dehors de l'emprise des coulisseaux 3 et 4 de commande des jambes 7 et 8. Elle est articulée à son autre extrémité, par l'intermédiaire d'une rotule 15, à l'extrémité d'un élément 20 solidaire de la nacelle 11 et en saillie latéralement par rapport à celle-ci. Cette disposition permet de conserver dans tout le champ de travail un angle très voisin de la normale entre la direction de la force agissant sur l'élément terminal pour son pivotement sous l'action du coulisseau 12 et la droite passant par les rotules 10 et 15, propriété que l'on désignera dans la suite de cette description par "poursuite de rigidité angulaire" de la commande du pivotement, et qui permet d'atteindre des performances nettement supérieures en termes de courses angulaires et de rigidité que celles des dispositifs proposés jusqu'ici.

Du fait des liaisons par rotules et malgré le fait que la rotule 13 est placée sur un angle du coulisseau 12 placé lui-même en position symétrique par rapport à la glissière 2, la disposition décrite ne contrôle pas le degré de liberté dans le sens y du dispositif. Ce contrôle est obtenu par la barre latérale 18 qui est articulée, à l'une de ses extrémités, par l'intermédiaire d'une rotule 17, sur un coulisseau motorisé 16, agencé pour se déplacer sur un guidage prismatique 23, rectiligne et à un degré de liberté en translation, parallèle au guidage 2 est également disposé dans la surface de base 1. La barre 18 est articulée à son autre extrémité, par l'intermédiaire d'une rotule 19, sur l'élément 20. Il convient de préciser que la rotule 19 ne doit pas impérativement être montée sur l'élément 20, mais elle pourrait également être montée sur la nacelle 11 ou sur l'élément terminal 21.

Cette disposition est suffisante pour contrôler entièrement le positionnement de l'élément terminal 21 dans tout l'espace de travail.

On comprend que les coulisseaux peuvent être conçus comme des chariots entraînés par un moteur dont l'organe d'entraînement engrène dans une crémaillère fixe, ou par une vis à bille, ou un système de traction à chaîne ou encore par un moteur linéaire ou autre. Les rotule 5, 6, 9, 10, 13, 15, 17 et 19 assurent l'articulation d'une barre sur la partie qui la porte ou sur celle qu'elle porte autour de n'importe quel axe avec une amplitude qui dépend de sa construction. Elles peuvent être du type cardan.

On comprend que le dispositif de la figure 1 peut être construit de manière à réaliser et contrôler le positionnement exact de l'élément terminal 21 non seulement en n'importe quel point d'un espace de travail xyz prédéterminé mais encore avec une orientation prédéterminée de l'axe de l'élément terminal autour d'un axe de pivotement parallèle à la direction y. En l'absence de la structure auxiliaire 12 à 20, l'ensemble nacelle 11 - élément terminal 21 est supporté par les jambes 7, 8 et pour chaque position des coulisseaux 3, 4, il lui reste deux degrés de liberté: un déplacement en arc de cercle dans le plan yz par déformation des parallélogrammes 7, 8 et une rotation autour d'un axe virtuel parallèle à la direction y. Or ces deux degrés de liberté sont exactement contrôlés par les positions relatives des coulisseaux 12 et 16 sur les guidages prismatiques 2, 23. Les positions de ces guidages prismatiques et les longueurs des barres de pivotement 14 et latérale 18 déterminent entièrement l'espace de travail que l'élément terminal 21 peut atteindre.

Dans l'exemple de la figure 1, les guidages 2 et 23 sont des guidage parallèles, mais ils peuvent bien entendu également être disposés dans n'importe quelle direction de l'espace ou être courbes. De même, les coulisseaux 3, 4 et 12 pourraient se déplacer sur des guidages séparés. D'autre part, les guidages prismatiques rectilignes pourraient être remplacés par des leviers pivotants à un degré de liberté: ainsi, par exemple, les coulisseaux 3 et 4 pourraient être remplacés par deux leviers à axes de pivotement parallèle à y. Les coulisseaux 12 et 16 peuvent, quant à eux, être remplacés par des leviers à axes de pivotement positionnés de façon quelconque. Les leviers peuvent être motorisés ou non. Les remarques qui précèdent s'appliquent également à toutes les autres formes d'exécution et variantes que l'on va décrire ci-après.

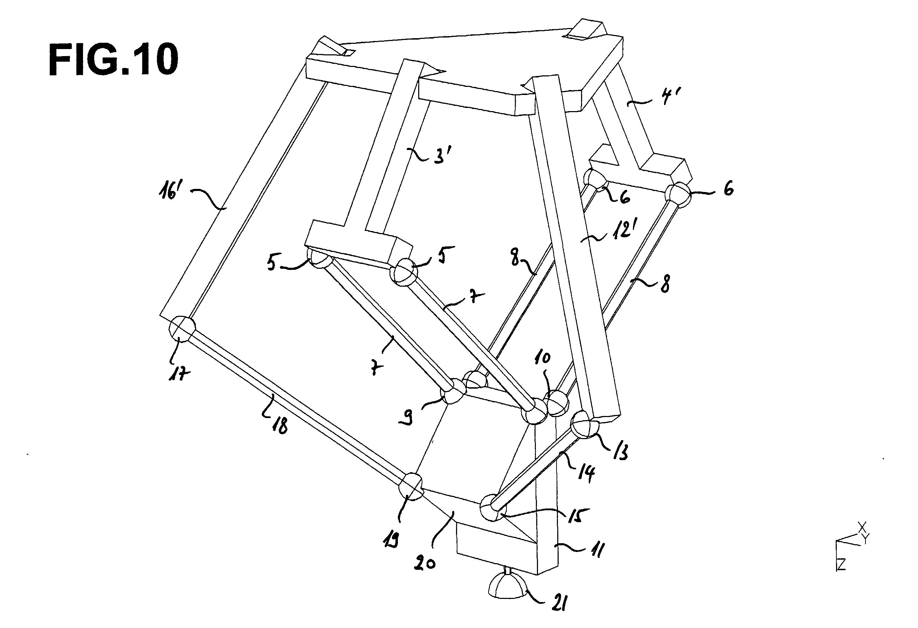

La figure 10 illustre, à titre d'exemple, une seconde variante de la première forme d'exécution représentée à la figure 1 et dans laquelle les coulisseaux 3 et 4 sont remplacés par des leviers 3' et 4', les coulisseaux 12 et 16 étant remplacés par des leviers 12' et 16'.

On a représenté à la figure 2 une variante simplifiée de la structure auxiliaire de la première forme d'exécution. Dans cette variante, les coulisseaux motorisés 12' et 16' des barres de pivotement 14' et latérale 18' sont montées sur deux guidages prismatiques 22 et 23' rectilignes à un degré de liberté, parallèles au guidage 2, c'est-à-dire orientés selon la direction x, mais surélevés de manière à se trouver à une certaine distance dans le sens de la direction z par rapport au plan de la base 1. Ces guidages 22 et 23' sont situés de part et d'autre du plan vertical xz de symétrie du dispositif. Compte tenu de la disposition des guidages 22 et 23', la présence de l'élément 20 n'est pas nécessaire pour obtenir une poursuite de rigidité angulaire satisfaisante et les rotules 15' et 19' peuvent être montées directement sur la nacelle 11, de préférence à l'une ou l'autre des extrémités de sa surface supérieure. On notera que, dans cette variante, les barres 14' et 18' interviennent toutes les deux à la fois dans la commande du pivotement et dans celle du contrôle du degré de liberté dans la direction y.

On a représenté à la figure 3 une deuxième forme d'exécution du dispositif de l'invention, avec le même schématisme qu'à la figure 1. On reconnaît sur cette figure une bonne partie des éléments déjà décrits et ils sont désignés par les mêmes signes de référence. On retrouve ainsi les deux guidages prismatiques 2 et 23 parallèles et orientées selon la direction x, les deux coulisseaux 3 et 4 qui jouent le même rôle que les éléments de même désignation de la première forme d'exécution, c'est-à-dire support au moyen de rotules 5 et 6 de deux paires de barres de support 7 et 8, chaque paire portant deux rotules 9 ou 10 liées comme dans la figure 1 à la nacelle 11 solidaire de l'élément terminal 21. La disposition des "jambes" de support de la nacelle étant la même que dans la première forme d'exécution, la structure auxiliaire qui contrôle les deux degrés de liberté résiduels de l'élément terminal 21 en diffère.

Comme dans le cas de la figure 1, la structure auxiliaire comporte une barre de pivotement 14 et une barre latérale 18 montées sur des coulisseaux 12 et 16 se déplaçant respectivement sur le guidage prismatique 2 et sur un guidage prismatique 23 de façon identique à ce qui à été décrit en regard de figure 1. En revanche, pour assurer le contrôle du pivotement de la nacelle, le dispositif de la figure 3 comporte trois organes rigides : une plaque de pivotement 29, la barre de commande 14, et une barre de contrôle 27. La plaque de pivotement 29 est articulée sur la nacelle 11 par un axe 30 parallèle à la direction y. Elle est représentée par un élément de forme trapézoïdale et son arête antérieure porte les deux rotules 15 et 19 pour l'articulation des barres 14 et 18 et une troisième rotule 28 qui s'articule sur la barre de contrôle 27. L'autre extrémité de la barre de contrôle 27 est montée, par l'intermédiaire d'une rotule 26, sur une partie 25 du coulisseau 3. L'emplacement de la rotule 26 sur le coulisseau 3 n'est pas déterminant. La rotule 26 pourrait aussi être plus en avant ou plus en arrière, ainsi que plus haut ou plus bas. De même, les centres des rotules 28 et 15 peuvent être positionnés n'importe où dans le volume de la plaque de pivotement 29, mais ils ne doivent pas être situés sur l'axe 30.

La barre latérale 18 ne doit pas nécessairement être reliée à la plaque de pivotement, mais peut être reliée à tout autre élément du dispositif cinématique, de manière qu'un déplacement de cette dernière dans la direction y soit obtenu.

L'élément terminal est fixe si les coulisseaux 3, 4, 12 et 16 sont eux-mêmes fixes sur leur guidage prismatique respectif, et tout déplacement soit en rotation autour d'un axe parallèle à 30 soit en translation dans l'espace de travail peut être commandé en agissant sur les moteurs qui entraînent les dits coulisseaux.

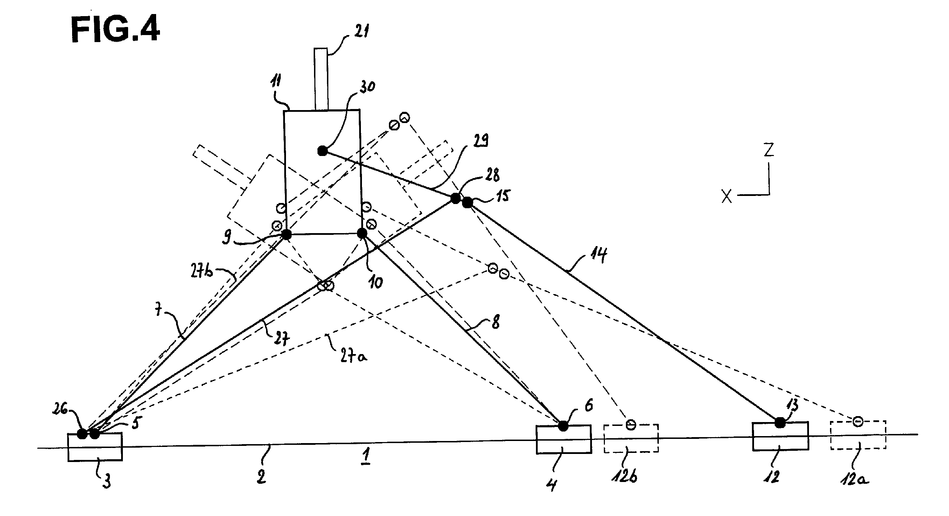

La figure 4 illustre une variante sans mouvement latéral de la deuxième forme d'exécution du dispositif de l'invention. On retrouve la même structure de support avec deux jambes montées sur deux coulisseaux et la même structure auxiliaire de pivotement avec une articulation intermédiaire, que dans les formes d'exécution précédentes. Du fait de l'absence du coulisseau 16 et de la barre latérale 18, les déplacements dans le sens y seront obtenus ici par un déplacement relatif entre le dispositif et les moyens de maintien de l'objet sur lequel l'élément terminal agit. On parle aussi d'un dispositif à main gauche et main droite.

La base 1 porte ici un seul guidage prismatique 2 sur lequel sont montés les trois coulisseaux 3, 4 et 12. Pour éviter tout mouvement latéral incontrôlé de la nacelle, les deux barres d'une des paires de barres de support 7 ou 8 doivent être reliées de façon rigide, ce qui revient à remplacer dans au moins une des jambes la paire de barres par un élément simple dont au moins sur une des jambes les rotules sont remplacées par des pivots à axes parallèles à l'axe 30. D'autres dispositions à deux pivots sont également envisageables.

La structure auxiliaire, qui assure le pivotement de la nacelle 11 liée solidairement à l'élément terminal 21 autour des articulations 9 et 10, comporte l'axe 30 et la plaque de pivotement 29 sur le bord antérieur de laquelle sont montées les articulations intermédiaires 28 et 15 reliant à la plaque 29 la barre de contrôle 27 et la barre de commande de pivotement 14, s'appuyant elle-même sur l'articulation 13 du coulisseau 12. Les articulations 9 et 10 pourraient être combinées de façon à avoir leurs axes confondus. Il en va de même des articulations 15 et 28.

A la figure 4 on voit encore en pointillé l'ampleur du débattement angulaire que la structure auxiliaire peut imposer à la nacelle 11 par un simple déplacement du coulisseau 12 entre les deux positions extrêmes 12a et 12b. Les positions correspondantes de la barre de contrôle 27 sont notées 27a et 27b.

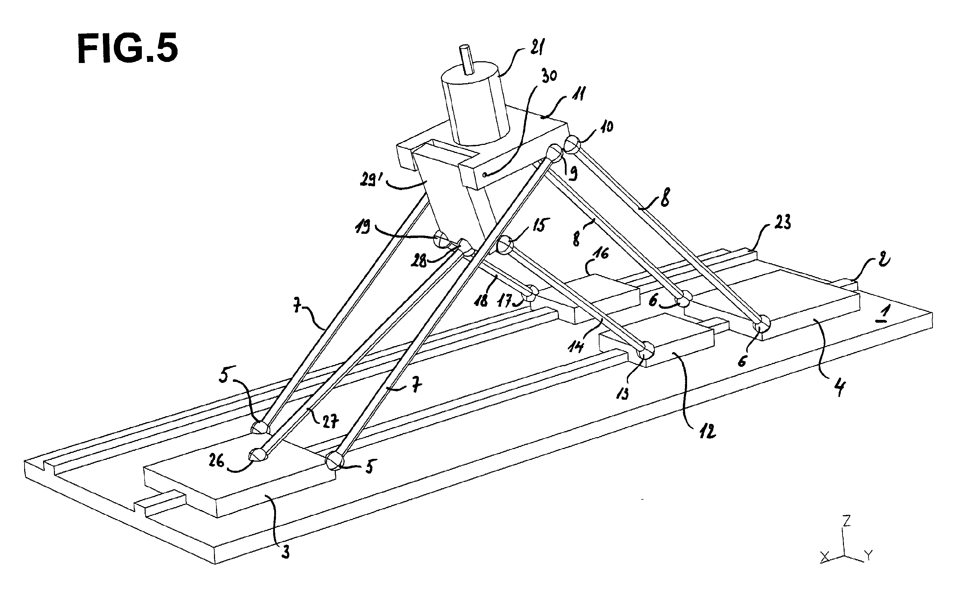

La troisième forme d'exécution, représentée à la figure 5, diffère de celle de la figure 3 d'une part par l'agencement de la plaque de pivotement 29' qui provoque, pour un déplacement du coulisseau 12 dans la même direction, un mouvement inversé de la nacelle en comparaison avec le mouvement de la nacelle du dispositif de la figure 3. Dans certains cas, cette disposition permet d'obtenir des conditions de fonctionnement particulièrement avantageuses.

L'élément terminal 21 est ici aussi rigidement solidaire de la nacelle 11, et toutes les articulations sont du type à rotule, à l'exception de l'articulation (simple) 30 de la plaque de pivotement 29' sur la nacelle, qui est orientée dans la direction y.

La plaque de base 1 porte ici aussi les deux guidages prismatiques parallèles 2 et 23. Sur le guidage prismatique 2 sont montés les deux coulisseaux 3 et 4, qui jouent exactement le même rôle que les coulisseaux 3 et 4 de la figure 3. Ils portent par l'intermédiaire de rotules 5, respectivement 6, des couples de barres de support 7, respectivement 8, formant deux parallélogrammes et définissant deux jambes de support de la nacelle 11. Comme dans le cas de la figure 3, l'emplacement des rotules sur la plaque de pivotement 29' n'est pas déterminant, à la seule condition qu'elles ne soient pas situées sur l'axe 30. On retrouve également une structure auxiliaire avec deux organes rigides et une articulation intermédiaire. Toutefois, l'ensemble est agencé de façon que le mouvement de pivotement de la nacelle 11 s'effectue dans le sens inverse de celui de la nacelle du dispositif représenté à la figure 3. Le coulisseau 12 est monté dans ce cas sur le guidage 2 de façon à se déplacer entre les coulisseaux 3 et 4, la disposition de la plaque de pivotement 29' et de la barre de pivotement 14, de la barre latérale 18 et de la barre de contrôle 27 étant choisie de façon que la plaque de pivotement puisse pivoter entre les barres de support 7.

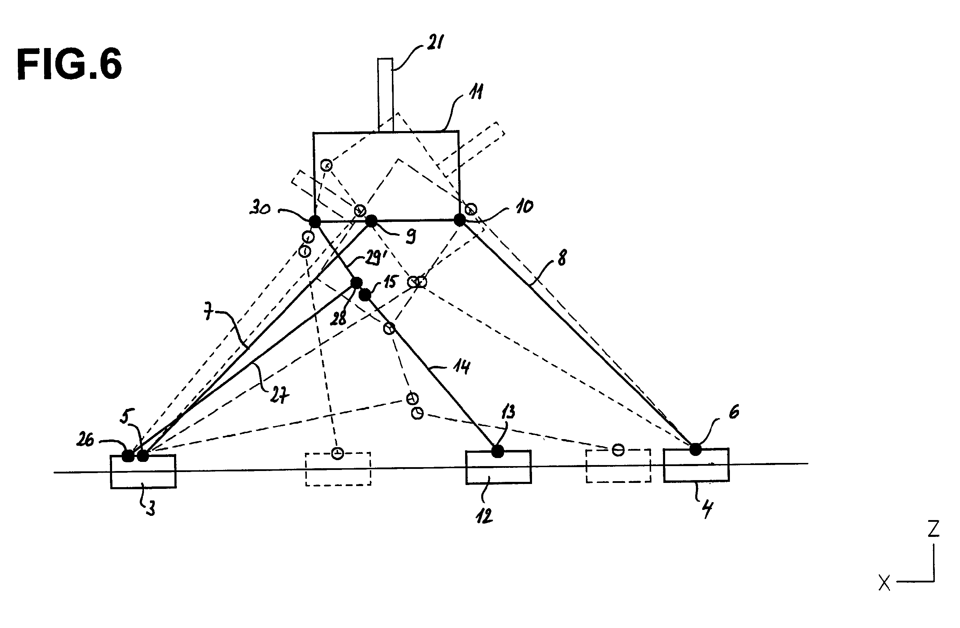

Une variante sans mouvement latéral du dispositif de la figure 5 est représentée à la figure 6. Ce dispositif peut en fait être considéré comme le dispositif inverse de celui représenté à la figure 4, en ce sens que la seule différence par rapport au dispositif à trois degrés de liberté représenté à la figure 4 réside dans la position de l'articulation 30 sur la nacelle par rapport aux articulations de pivotement 9 et 10.

Il convient de noter que dans tous les exemples illustrés aux figures 3 à 6, la rotule 15 pourrait aussi être fixée sur la barre 27, à condition qu'elle ne soit pas confondue avec la rotule 26, ou la rotule 28 pourrait être fixée sur la barre 14, à condition qu'elle ne soit pas confondue avec la rotule 13.

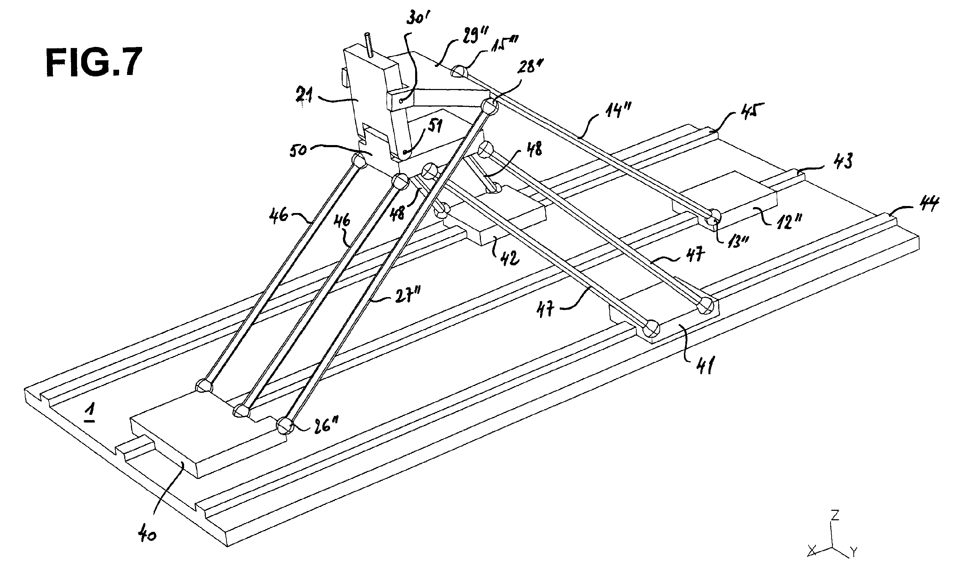

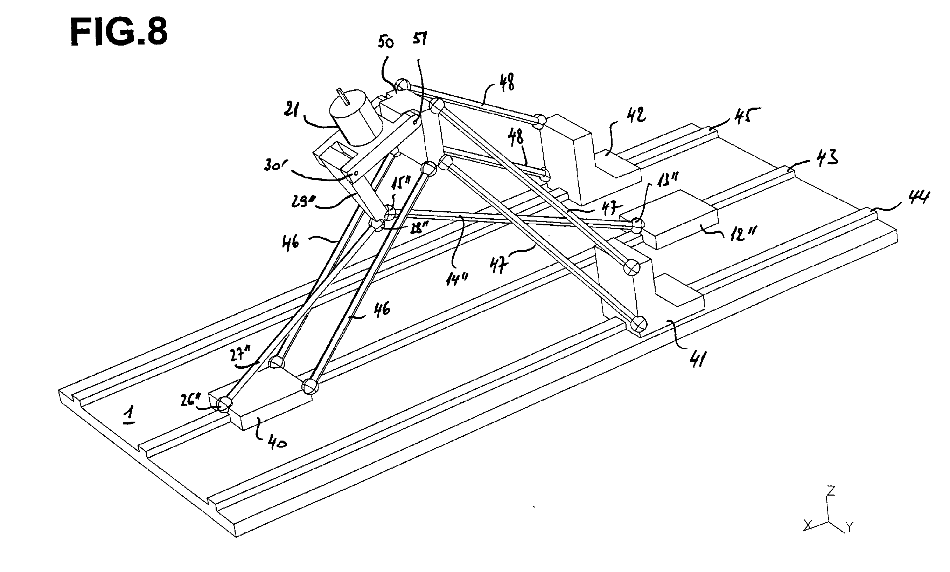

Alors que dans tous les exemples décrits ci-dessus l'élément terminal est rigidement solidaire de la nacelle, les figures 7 et 8 montrent deux exemples d'une quatrième forme d'exécution du dispositif de l'invention, dans lequel le mouvement de l'élément terminal 21 n'est pas rigidement solidaire de celui de la nacelle désignée par 50. La structure de support et de déplacement de la nacelle est, dans ces deux exemples, une structure du type de celle décrite dans les brevets EP 0250470 et US 4,976,582, c'est-à-dire une structure dans laquelle les trois degrés de liberté de base de la nacelle s'effectuent en parallèle à partir de trois coulisseaux motorisés 40, 41 et 42, se déplaçant le long de trois guidages prismatiques parallèles 43, 44 et 45, et actionnant chacun une jambe 46, 47 et 48 supportant la nacelle 50, de façon à conserver le parallélisme de la nacelle par rapport à la base 1. Les trois jambes de la structure décrite sont formées chacune par une paire de barres de support 46, 47, 48 articulées par des rotules sur le coulisseau qui les porte et sur un côté de la nacelle. On a donc une structure de trois parallélogrammes déformables qui maintient la nacelle parallèle à la base et permet de commander des déplacements en translation de la nacelle dans tout l'espace de travail prévu. L'élément terminal 21 est ici monté en articulation sur la nacelle de façon à pouvoir pivoter autour d'un axe 51 solidaire de la nacelle.

La structure auxiliaire qui permet de commander un pivotement contrôlé de l'élément terminal 21 autour de l'axe 51 comprend une plaque de pivotement 29" montée à l'une de ses extrémités en pivotement sur l'élément terminal 21 autour d'un axe 30', et coopérant avec une barre de pivotement 14" et une barre de contrôle 27". La barre de pivotement 14" est montée en articulation à l'une de ses extrémité sur un coulisseau motorisé 12" pouvant se déplacer le long d'un guidage prismatique 43 et en articulation à son autre extrémité sur la plaque de pivotement 29". La barre de contrôle 27" est montée en articulation à l'une de ses extrémités 26" sur le coulisseau 40 et en articulation à son autre extrémité sur la plaque 50, à un endroit non confondu avec l'axe 30'. Dans une variante, l'articulation 26" pourrait aussi être montée sur la nacelle 50 à un endroit non confondu avec l'axe 51.

Les deux variantes représentées au figures 7 et 8 se distinguent par l'agencement de la plaque de pivotement 29" qui provoque, pour un déplacement du coulisseau 12" dans la même direction, des mouvements de pivotement inversés de l'élément terminal 21.

Comme dans le cas des autres modes d'exécution décrits, les coulisseaux 40, 41 et 42 pourraient être remplacés par des leviers pivotants, les axes de pivotement de ces leviers devant ici être respectivement parallèles à l'axe passant par les centres des rotules montées à la base des jambes 46, 47 et 48. Quant au coulisseau 12", il pourrait être remplacé par un levier pivotant autour d'un axe positionné de façon quelconque.

Il convient de noter que dans les exemples illustrés aux figures 7 et 8, la rotule 15" pourrait aussi être fixée sur la barre 27", à condition qu'elle ne soit pas confondue avec la rotule 26", ou la rotule 28" pourrait être fixée sur la barre 14", à condition qu'elle ne soit pas confondue avec la rotule 13".

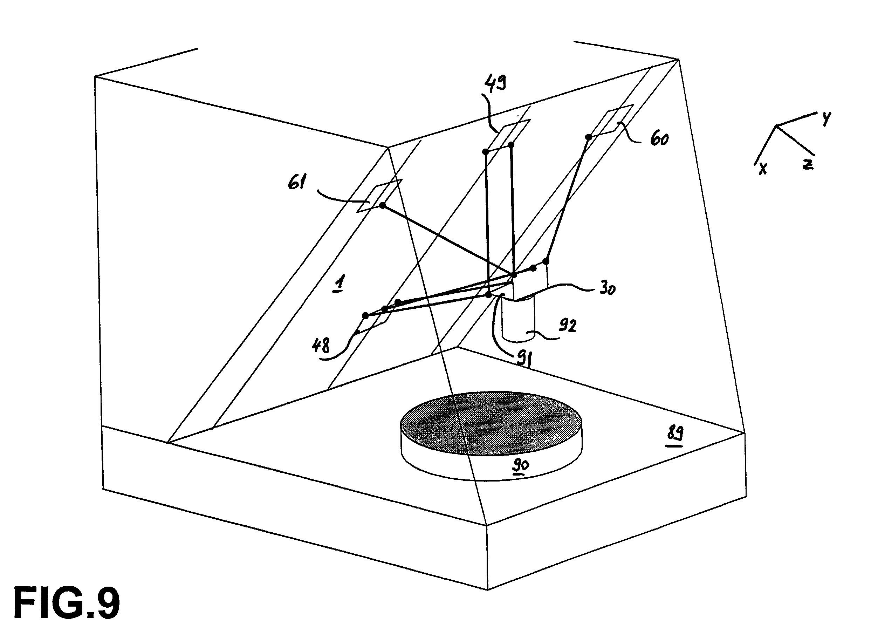

Il reste à décrire la figure 9 qui montre un exemple d'application du dispositif selon l'invention à une machine-outil. La forme d'exécution choisie pour montrer cette application est semblable à celle de la figure 3, à l'exception du fait que les coulisseaux 60 et 61, correspondant aux coulisseaux 12 et 16 du dispositif de la figure 2, sont guidés dans des guidages prismatiques séparés, parallèles à la direction x. Les coulisseaux 48 et 49 correspondent quant à eux aux coulisseaux 3 et 4 du dispositif de la figure 3.

La base 1 est une plaque inclinée, par exemple à 45° au-dessus de la table de travail 89, munie d'un plateau tournant 90 d'axe par exemple vertical. Celui-ci est destiné à recevoir une pièce sur laquelle l'outil de l'élément terminal 92 solidaire de la nacelle 91 pourra exécuter différentes opérations d'usinage. Il est également envisageable que l'élément terminal 92 soit équipé d'un porteur de pièces, entraîné ou pas, et que le plateau tournant soit remplacé par un ou plusieurs outils motorisés ou passifs ou une combinaison des deux, et l'usinage est réalisé en déplaçant la pièce devant les outils.

De façon générale, il est possible d'ajouter à chaque barre simple, comme par exemple 14, 18, 27, une deuxième barre qui lui est parallèle et qui travaille de façon identique. Ce mode de faire permet d'améliorer la stabilité du dispositif et d'augmenter sa rigidité. Les effets négatifs de l'hyperguidage ainsi généré peuvent être éliminés dans une grande mesure par des solutions connues, telles qu'une réalisation de haute précision ou l'introduction d'un levier d'équilibrage.

## Revendications

1. Dispositif cinématique de support et de déplacement programmable d'un élément terminal (21) dans une machine ou un instrument comprenant une base fixe (1) définissant un plan de référence, ce dispositif comprenant une structure de support et de déplacement avec au moins deux jambes rigides (7, 8; 46, 47, 48) reliées par une extrémité à des organes (3, 4; 40, 41, 42) guidés de manière à se déplacer chacun selon un degré de liberté par rapport à la base, et par l'autre extrémité à une nacelle (11; 50) liée elle-même au dit élément terminal, les liaisons entre les jambes et la nacelle d'une part et entre les jambes et les organes guidés d'autre part étant des articulations, et le mouvement des dits organes guidés permettant de déplacer la dite nacelle en translation à volonté dans un espace de travail prédéterminé, **caractérisé en ce que** pour assurer des mouvements de pivotement de l'élément terminal autour d'un axe lié à la nacelle, la structure de support et de déplacement comporte une structure auxiliaire également formée d'éléments rigides et d'articulations, avec au moins une articulation intermédiaire, agissant sur l'élément terminal en s'appuyant sur la base indépendamment des jambes.

2. Dispositif selon la revendication 1, **caractérisé en ce que** la dite structure auxiliaire comprend au moins un organe guidé de manière à se déplacer selon un degré de liberté par rapport à la base.

3. Dispositif selon la revendication 2, **caractérisé en ce qu'**il comprend des moyens pour déplacer la nacelle dans une direction parallèle à celle de l'axe de pivotement de l'élément terminal ces moyens étant combinés à la dite structure auxiliaire.

4. Dispositif selon l'une des revendications 1 à 3, **caractérisé en ce que** la dite structure auxiliaire comporte au moins un élément de liaison rigide (27) contrôlant un degré de liberté de l'élément terminal résultant de l'articulation intermédiaire.

5. Dispositif selon la revendication 4, **caractérisé en ce que** le dit élément rigide de contrôle (27) est articulé entre la dite articulation intermédiaire (28) et un organe (3) guidé d'une jambe (7) de la dite structure de support et de déplacement, l'élément terminal étant rigidement lié à la nacelle.

6. Dispositif selon la revendication 5, **caractérisé en ce que** l'articulation intermédiaire (28) est montée sur un élément rigide (29), ce dernier étant monté en pivotement (30) sur la nacelle (11) ou sur l'élément terminal (21).

7. Dispositif selon la revendication 4, **caractérisé en ce que** le dit élément rigide de contrôle (27") est articulé entre la dite articulation intermédiaire (28") et un organe guidé (40) d'une jambe (46) de la dite structure de support et de déplacement, l'élément terminal étant monté pivotant sur la nacelle (50).

8. Dispositif selon la revendication 4, **caractérisé en ce que** le dit élément rigide de contrôle est articulé (27") entre l'articulation intermédiaire (28") et la nacelle (50), l'élément terminal, étant monté pivotant sur cette dernière.

9. Dispositif selon la revendication 2, **caractérisé en ce que** l'articulation intermédiaire de la structure auxiliaire est une articulation à pivotement.

10. Dispositif selon la revendication 1, **caractérisé en ce qu'**au moins une partie des articulations sont des articulations à rotule, et **en ce que** la dite structure de support et de déplacement est agencée de manière à permettre des déplacements de l'élément terminal dans trois directions de l'espace, l'espace de travail s'étendant à un volume déterminé par l'amplitude des déplacements des dits organes guidés.

11. Dispositif selon la revendication 1, **caractérisé en ce qu'**au moins trois des articulations utiles sont des articulations à pivotement, les axes de pivotement étant parallèles, et l'espace de travail est limité à une surface contenue dans un plan perpendiculaire au dit plan de référence et à la direction des axes de pivotement.

12. Dispositif selon la revendication 11, **caractérisé en ce que** la machine ou l'instrument comprend un support susceptible d'être déplacé dans une direction parallèle à celle des dits axes de pivotement et destiné à recevoir une pièce sur laquelle l'élément terminal agit.

13. Dispositif selon l'une quelconque des revendications précédentes, **caractérisé en ce que** le volume de l'espace de travail auquel l'élément terminal accède étant prédéterminé, les dimensions, les emplacements et les agencements des composants de la structure de support et de déplacement sont déterminés par le calcul en fonction de ce volume.

14. Dispositif selon l'une quelconque des revendications précédentes, **caractérisé en ce qu'**au moins un des organes guidés est guidé en translation.

15. Dispositif selon l'une quelconque des revendications précédentes, **caractérisé en ce qu'**au moins un des organes guidés est guidé en rotation.

16. Dispositif selon l'une quelconque des revendications précédentes, **caractérisé en ce qu'**au moins un des organes guidés est un organe de commande à moteur.

17. Dispositif selon la revendication 1, **caractérisé en ce que** les dites articulations sont des articulations à pivot, à rotule, ou à cardans.
